# EUROPEAN PATENT APPLICATION

(11) **EP 3 744 553 A1**
(43) Date of publication of application: **02.12.2020**
(21) Application number: 19188949.2
(22) Date of filing: 29.07.2019
(51) Int. Cl.: B60L 1/00, B60L 53/16, B60L 53/18

(54) **CONTROL SYSTEM AND METHOD FOR DISCHARGE CONTROL OF ELECTRIC VEHICLE**

(30) Priority: 28.05.2019 CN 201910450401
(71) Applicant: SAIC MOTOR Corporation Limited, Pilot Free Trade Zone Shanghai Shanghai 200120 (CN)
(72) Inventor: LI, Xiaopeng, Shanghai, Shanghai 200438 (CN); CHEN, Yanlei, Shanghai, Shanghai 200438 (CN); WANG, Zusheng, Shanghai, Shanghai 200438 (CN); YAN, Zhao, Shanghai, Shanghai 200438 (CN); ZHOU, Jiangfang, Shanghai, Shanghai 200438 (CN); QU, Xiaofei, Shanghai, Shanghai 200438 (CN); YANG, Weisong, Shanghai, Shanghai 200438 (CN); WANG, Xiang, Shanghai, Shanghai 200438 (CN); LI, Jun, Shanghai, Shanghai 200438 (CN); CHEN, Sinan, Shanghai, Shanghai 200438 (CN)
(74) Representative: HGF

(57) **Abstract**

The disclosure provides a control system and method for discharge control of an electric vehicle. The control system for discharge control of an electric vehicle comprises: a bidirectional charger configured to be connected with a battery of the electric vehicle and to output battery power through a discharge gun; and a battery management system connected with the bidirectional charger, the battery management system being configured to determine the type of the discharge gun based on a connection confirm signal from a circuit connected with the discharge gun, and the type of the discharge gun being a type of a vehicle-to-load discharge gun or a type of a vehicle-to-vehicle discharge gun. The bidirectional charger is configured to determine an output capacity during a discharge process as a minimum value of its own output capacity, a state of charge and a maximum rating value of a cable connected with the discharge gun.

## Description

### Technical Field

The disclosure relates generally to a discharge control technology of electric vehicles, in particular to a control system and a control method for discharge control of electric vehicles.

### Background Art

Nowadays, with the increasing demand for environmental protection, electric vehicles, as new energy vehicles, have attracted much attention because of their relatively smaller environmental impact compared with that of traditional vehicles. Electric vehicles are powered by an on-board power source (e.g., power batteries) and drive wheels by motors. With the increasing endurance capability of electric vehicles, electric vehicles now have the function of discharging electric power from on-board batteries to external devices. In other words, electric vehicles can export the electric power of on-board batteries to external devices.

However, in a discharge process of electric vehicles, there are many problems. For example, a misoperation of inserting or extracting a discharge gun or the discharge gun falling off from a vehicle socket due to some failures will affect the performance and life of batteries of the electric vehicle, and will even cause an electric arc and a spontaneous combustion, which will seriously threaten personal safety and vehicle safety.

In one solution of prior art, a discharge-button switch is used to solve the above mentioned problem. According to this solution, a discharge mode is determined by means of manually operating the discharge-button switch. However, the solution has some problems, for example, the structural integration is not high and it is inconvenient for users.

In addition, discharge control of electric vehicles in prior art has some problems of low discharge efficiency and energy waste.

### Summary of the invention

In view of the above mentioned problems, the disclosure provides a technical solution of discharge control strategy of electric vehicles, which enhances the safety during a discharging process, improves the discharge efficiency, and better meets the requirements of vehicle economy and comfort.

According to one aspect of disclosure, there provides a control system for discharge control of an electric vehicle which comprises: a bidirectional charger configured to be connected with a battery of the electric vehicle and to output battery power through a discharge gun; and a battery management system connected with the bidirectional charger, the battery management system being configured to determine the type of the discharge gun based on a connection confirm signal from a circuit connected with the discharge gun, and the type of the discharge gun being a type of a vehicle-to-load discharge gun or a type of a vehicle-to-vehicle discharge gun, wherein the bidirectional charger is configured to determine an output capacity during a discharge process as a minimum value of its own output capacity, a state of charge and a maximum rating value of a cable connected with the discharge gun.

According to a possible embodiment of the disclosure, when the type of the discharge gun is determined as the type of a vehicle-to-vehicle discharge gun, the battery management system controls a switch to be connected with a control terminal of the bidirectional charger such that a control pilot signal is transmitted from the bidirectional charger to the vehicle-to-vehicle discharge gun; the bidirectional charger adjusts a duty cycle of the control pilot signal based on the output capability so as to determine an output current; and the bidirectional charger adjusts the duty cycle of the control pilot signal in real time based on the state of charge, which is monitored by the battery management system, so as to adjust the output current. According to a possible embodiment of the disclosure, when the type of the discharge gun is determined as the type of the vehicle-to-load discharge gun, the vehicle-to-load discharge gun is configured to couple with a load via a power outlet to supply the battery power to the load; or the control system further includes a control box connected between the vehicle-to-load discharge gun and a charge gun so as to realize a vehicle-to-vehicle discharge in a mode of vehicle-to-load discharge; and wherein the control box is configured to be woken up from a sleep state in response to a signal indicating a connection completion between the charge gun and an additional electric vehicle, and to determine a duty cycle of the control pilot signal based on a rating value of a cable connected with the charge gun so as to determine a charge current.

According to a possible embodiment of the disclosure, in case of detecting that a charging-allowable switch in the additional electric vehicle is closed, the control box is further configured to control a relay in the control box to turn on so as to output the charge current.

According to a possible embodiment of the disclosure, in case of at least one of the following conditions occurs, the control box is further configured to control the relay to turn off so as to stop outputting the charge current and to enter into the sleep state: detecting that the charge current is below a predetermined threshold for a predetermined time; detecting that the charging-allowable switch is open; detecting a failure of the control box; and receiving a signal indicating that the charge gun is disconnected from the additional electric vehicle.

According to a possible embodiment of the disclosure, the battery management system is configured to detect the state of itself and a state of the electric vehicle after determining the type of the discharge gun, so as to determine whether the electric vehicle is allowed to enter into a discharge stage, and configured to trigger an alarm when an abnormal condition occur; and when the battery management system determines that the electric vehicle is allowed to enter into the discharge stage, the bidirectional charger is configured to detect its own state to determine whether the electric vehicle is allowed to enter into the discharge stage, and configured to trigger an alarm when an abnormal condition occur.

According to a possible embodiment of the disclosure, the control system is configured to notify the electric vehicle via a bus and provide an alarm message in the electric vehicle when the step of trigging an alarm is executed.

According to a possible embodiment of the disclosure, the control system is further configured to store information including the abnormal condition in a memory of the control system when the step of trigging an alarm is executed.

According to a possible embodiment of the disclosure, the bidirectional charger has a discharge stage during which the battery power is outputted through the discharge gun, and a discharge ending stage during which the output of the battery power is ending; the battery management system is configured to lock an electronic lock for the discharge gun when the bidirectional charger is in the discharge stage, such that the discharge gun is unable to disconnect from a vehicle socket of the electric vehicle; and the battery management system is further configured to unlock the electronic lock when the bidirectional charger is in the discharge ending stage, such that the discharge gun is able to disconnect from the vehicle socket.

According to another aspect of the disclosure, there provides a control method for discharge control of an electric vehicle, optionally implemented using the control system described above. The control method comprises the steps of: determining a type of a discharge gun based on a connection confirm signal from a circuit connected with the discharge gun, and the types of the discharge gun including a type of a vehicle-to-load discharge gun and a type of a vehicle-to-vehicle discharge gun; after determining the type of the discharge gun, the battery management system detecting a state of the battery management system and a state of the electric vehicle to determine whether it is allowed to enter into a discharge stage, and triggering an alarm when an abnormal condition occurs; in the case of the battery management system determining that it is allowed to enter into the discharge stage, the bidirectional charger detecting a state of bidirectional charger to determine whether it is allowed to enter into the discharge stage, and triggering an alarm when an abnormal condition occurs; and in the case of the bidirectional charger determining that it is allowed to enter into the discharge stage, the bidirectional charger determining an output capacity during a discharge process as a minimum value of its own output capacity, a state of charge and a maximum rating value of a cable connected with the discharge gun.

According to a possible embodiment of the disclosure, when the type of the discharge gun is determined as the type of the vehicle-to-vehicle discharge gun, the control method comprises the steps of: the battery management system controlling a switch to be connected with a control terminal of the bidirectional charger, such that the control pilot signal is transmitted from the bidirectional charger to the vehicle-to-vehicle discharge gun; the bidirectional charger adjusting a duty cycle of the control pilot signal based on the determined output capability to determine an output current; and the bidirectional charger adjusting the duty cycle of the control pilot signal in real time to adjust the output current based on the state of charge which is monitored by the battery management system.

According to a possible embodiment of the disclosure, when the type of the discharge gun is determined as the type of the vehicle-to-load discharge gun, the control method comprises the steps of: coupling the vehicle-to-load discharge gun with a load via a power outlet to supply power to the load; or coupling the vehicle-to-load discharge gun with a charge gun through a control box to charge an additional electric vehicle in the mode of vehicle-to-load discharge; wherein the control box is configured to be woken up from a sleep state in response to a signal indicating a connection completion between the charge gun and the additional electric vehicle, and to determine a duty cycle of the control pilot signal based on a rating value of a cable connected with the charge gun to determine the charge current.

According to a possible embodiment of the disclosure, the control method further comprises the step of the control box controlling a relay in the control box to turn on so as to output the charge current when the control box detects that a charging-allowable switch in the additional electric vehicle is closed.

According to a possible embodiment of the disclosure, the control method further comprises the step of the control box controlling the relay to turn off so as to stop outputting the charge current and to enter into the sleep state in case of at least one of the following conditions occurs: detecting that the charge current is below a predetermined threshold for a predetermined time; detecting that the charging-allowable switch is open;
detecting a failure of the control box; and receiving a signal indicating that the charge gun is disconnected from the additional electric vehicle.

According to a possible embodiment of the disclosure, the method further comprises the steps of: locking an electronic lock for the discharge gun such that the discharge gun is unable to disconnect from a vehicle socket of the electric vehicle; and unlocking the electronic lock such that the discharge gun is able to disconnect from the vehicle socket.

According to the technical solution of the disclosure, the discharge process is controlled by means of monitoring output parameters of the discharge process, and the output parameters are determined in view of various factors in the discharge process, which can improve the discharge efficiency and provide a discharge strategy realizing energy saving and environmental protection. Furthermore, the disclosure realizes the function of discharging to an additional electric vehicle in the mode of vehicle-to-load discharge by means of a control strategy using a control box, which enhances the compatibility of discharge technology. Moreover, in the mode of vehicle-to-vehicle discharge, the disclosure is able to protect the performance and life of the batteries in an electric vehicle by means of adjusting the output parameters in real time during a discharge process based on the battery state during the discharge process. In addition, the disclosure is able to enhance the safety of a discharge process by means of using an electronic lock to lock the discharge gun during the discharge process.

### Brief Description of the Drawings

The features, characteristics, advantages and benefits of the present invention will be understood clearly through the following detailed description in conjunction with the accompanying drawings.
Figure 1 shows a schematic diagram illustrating the discharge principle of an electric vehicle according to a feasible embodiment of the disclosure.
Figure 2A shows a schematic diagram of an application scenario in a mode of vehicle-to-load discharge.
Figure 2B shows a schematic diagram of another application scenario in the mode of vehicle-to-load discharge.
Figure 3 shows a flow chart of a control process in the mode of vehicle-to-load discharge according to a feasible embodiment of the disclosure.
Figure 4 shows a flow chart of the control process for a control box in the mode of vehicle-to-load discharge according to a feasible embodiment of the disclosure.
Figure 5 shows a flow chart of the control process in a mode of vehicle-to-vehicle discharge according to a feasible embodiment of the disclosure.

### Detailed Description

Some feasible embodiments of the disclosure are described below in conjunction with the accompanying drawings.

The disclosure generally relates to a discharge control technology of electric vehicles. One aspect of the disclosure relates to a control system for discharge control of an electric vehicle, which provides a control strategy for the electric vehicle in two modes of vehicle-to-load discharge (V2L) and vehicle-to-vehicle discharge (V2V).

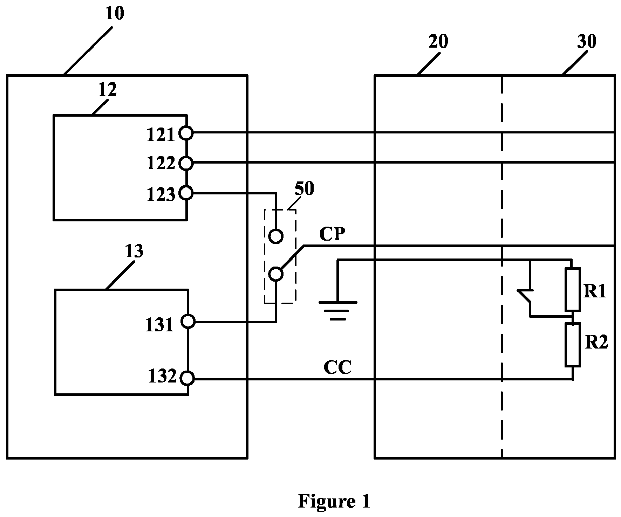

Figure 1 schematically illustrates a schematic diagram of the discharge principle of an electric vehicle according to a feasible embodiment of the disclosure. As shown in Figure 1, a control system includes a control device (10) installed in the electric vehicle, which is connected to a vehicle socket (20). The vehicle socket (20) is adapted to be inserted by a discharge gun (30). The control device (10) includes a bidirectional charger (BOC) (12) and a battery management system (BMS) (13) electrically connected to the bidirectional charger (12). It should be understood that although the exemplary configuration in Figure 1 shows that the battery management system (13) is arranged independently of the bidirectional charger (12), battery management system (13) may also be integrated into the bidirectional charger (12).

The bidirectional charger (12) connects with the battery the electric vehicle, and may dynamically adjust discharge parameters (e.g., current or voltage) based on the information provided by the battery management system (13), and perform corresponding actions to complete a discharge process. The bidirectional charger (12) includes charge and discharge terminals (121), (122) and a control terminal (123). The charge and discharge terminals (121) and (122) are connected with a charge-and-discharge main circuit and the control terminal (123) is connected with one end of a vehicle-to-vehicle switch 50 (V2V_CP switch). The battery management system (13) includes a connection confirmation terminal (131) and a control terminal (132). The switch (50) is adaptive to selectively connect to the control terminal (123) of the bidirectional charger (12) or the control terminal (132) of the battery management system (13), so as to regulate the discharge output (e.g., discharge current) based on a control pilot signal (CP: Control Pilot) determined by the bidirectional charger (12) or by the battery management system (13).

Resistors, such as R1 and R2 shown in Figure 1, are provided in the head of the discharge gun (30). The connection confirmation terminal (131) of the battery management system (13) is connected to the ground of vehicle body via the resistors R1 and R2 to form a circuit. The battery management system (13) determines whether the type of the discharge gun is a vehicle-to-load discharge gun or a vehicle-to-vehicle discharge gun based on the status of the connection confirm signal in this circuit (for example, the connection confirm signal may include an information indicating a resistance value of the resistance in the gun head). The two types of discharge guns correspond to two discharge modes respectively, namely, a vehicle-to-load discharge gun corresponds to a mode of vehicle-to-load discharge, and a vehicle-to-vehicle discharge gun corresponds to a mode of vehicle-to-vehicle discharge.

In this embodiment, the battery management system (13) may lock an electronic lock of the discharge gun when the bidirectional charger (12) is in a discharge stage, such that the discharge gun cannot disconnect from a socket of the electric vehicle. The electronic lock of the discharge gun is configured to be unlocked when the bidirectional charger (12) enters into a discharge ending stage, such that the discharge gun can disconnect from the socket of the electric vehicle. Thus, the technical solution of the disclosure realizes a safer discharge by means of a simple operation.

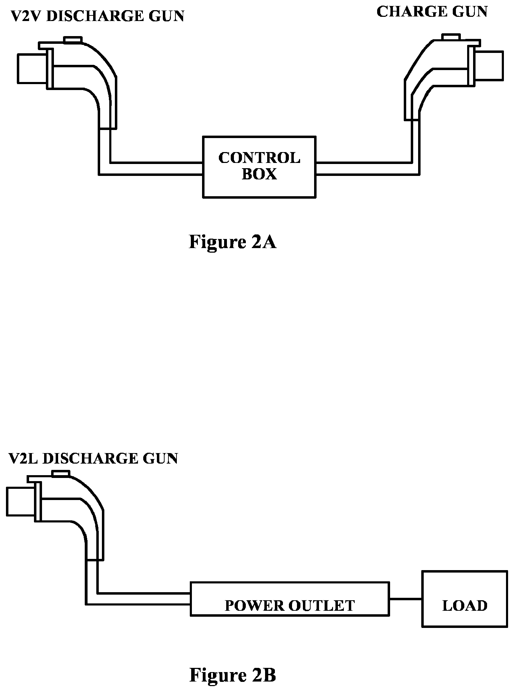

In this embodiment, the electric vehicle in the mode of vehicle-to-load discharge has two application scenarios. One is that the discharge gun is connected to load via a power outlet (as shown in Figure 2A), so as to supply power to the load; the other is that the discharge gun is connected to a charge gun via a control box (as shown in Figure 2B), so as to supply power to an additional electric vehicle.

In the case shown in Figure 2B, the control system may also include the control box which is disposed outside the electric vehicle. In this case, with the control device (10) and the control box, the function of charging the additional electric vehicle in the mode of vehicle-to-load discharge is realized. In other words, the function of vehicle-to-vehicle discharge is realized in the mode of vehicle-to-load discharge by means of combining a control strategy of the control box with a control strategy of the control system.

Therefore, according to the technical solution of the disclosure, in the mode of vehicle-to-load discharge, the electric vehicle is able to perform energy interaction with load, and to perform energy interaction with an additional electric vehicle as well, and thus a bidirectional charging solution with high performance, low cost and strong compatibility is realized.

In this embodiment, in the mode of vehicle-to-vehicle discharge, the bidirectional charger (12) adjusts the duty cycle of the control pilot signal in real time based on a state of battery output (e.g., SOC: state of charge) so as to regulate an output current, thereby protecting the performance and life of the battery of the electric vehicle.

Another aspect of the disclosure relates to a control method for discharge control of an electric vehicle, which can be performed using the above described control system. Therefore, the characteristics described above with reference to the control system are also applicable in the control method.

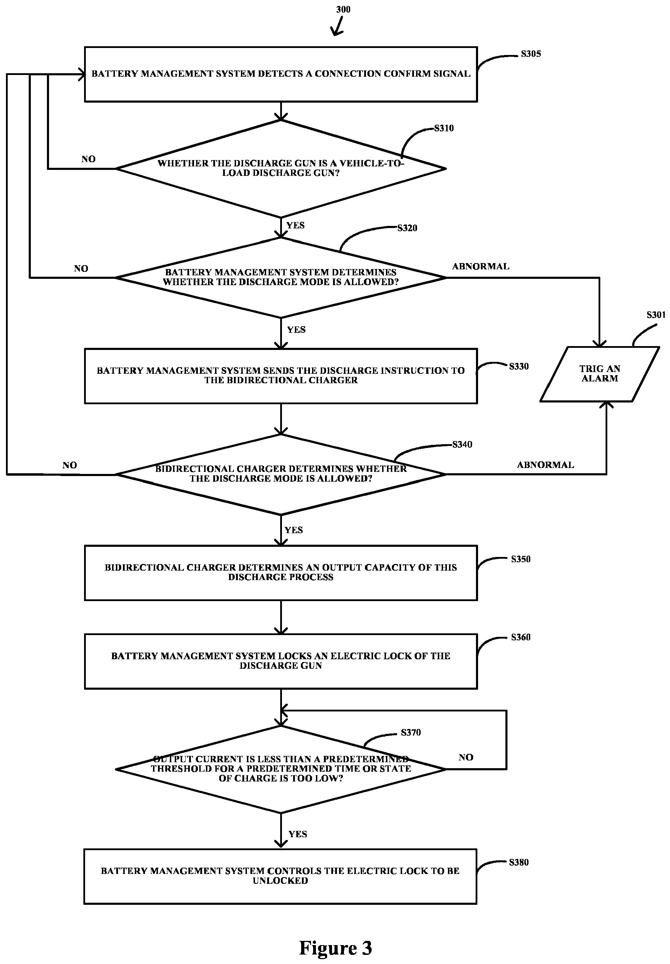

The control method according to the disclosure mainly includes a control strategy in the mode of the vehicle-to-load discharge, a control strategy for the control box in the mode of vehicle-to-load discharge and a control strategy in the mode of the vehicle-to-vehicle discharge. The process of each control strategy will be described separately in conjunction with the drawings. Fig. 3 shows a control method (300) for a mode of vehicle-to-load discharge according to a feasible embodiment of the disclosure. Optionally, the control method (300) is implemented using the above described control device (10). The principle of the disclosure is not limited to a control device of a particular type and structure.

In step S305, the battery management system (13) detects the connection confirm signal (CC: Connection Confirm) in a line connected with the vehicle socket (20).

In step S310, the battery management system (13) determines whether a gun connected with the vehicle socket (20) is a vehicle-to-load discharge gun based on the connection confirm signal. For example, the connection confirm signal contains an information of a resistance value of the resistance (e.g. R1 and R2) in the head of the discharge gun connected to the vehicle socket (20), and based on this resistance information. The battery management system (13) determines a type of the discharge gun based on the information of the resistance value.

In step S320, the battery management system (13) determines whether the discharge mode is allowed to be entered into. In this step, the battery management system (13) detects the discharge gun, for example, whether there is an abnormal leakage. The battery management system (13) also determines whether the discharge conditions are met based on a combination of its own state and vehicle state, for example, the battery management system (13) performs a self-check. When an abnormal condition occurs, the method 300 returns to step S305 and triggers an alarm (block 301). In the case of triggering an alarm, the electric vehicle may be notified via a bus (for example, CAN: Controller Area Network), and a corresponding alarm information can be provided in the electric vehicle on a dashboard or by an alarm lamp. In the case of triggering an alarm, the information of abnormal conditions (e.g., the reason of failures, etc.) may be stored in a memory of the control system.

In step S330, when the battery management system (13) determines that it is allowed to enter into the discharge mode, a discharge instruction is sent to the bidirectional charger (12).

At step S340, the bidirectional charger (12) determines whether the discharge mode is allowed to be entered into. In this step, the bidirectional charger (12) conducts a self-check to determine whether it is allowed to enter into the discharge mode. When an abnormal condition occurs, the method 300 returns to step S305 and triggers an alarm (block 301). When the step of trigging an alarm is performed, the electric vehicle is notified via a bus (for example, controller local area network), and a corresponding warning information is provided in the electric vehicle by an apparatus (e.g., dashboard) or an alarm lamp. In the case that the step of trigging an alarm is performed, information of the abnormal condition (e.g., reason of a failure, etc.) is stored in a memory of the vehicle control system.

In step S350, when the bidirectional charger (12) determines that it is allowed to enter into the discharge mode, the bidirectional charger (12) determines an output capacity during a discharging process as a minimum value of a minimum value of its own output capacity, a state of charge obtained by the battery management system (13) (e.g. the bidirectional charger (12) obtains the state of charge based on the battery state which is monitored by the battery management system (13)) and a maximum capacity of the cable of the discharge gun (e.g. the maximum capacity is determined based on the cable connected with the discharge gun). That is to say, according to the control method (300), a discharge power is determined by taking into account the following three factors: the output capacity of the bidirectional charger, the state of charge and the maximum capacity of the cable of the discharge gun, such that a more efficient and intelligent discharge strategy is realized. In this step, when the bidirectional charger (12) determines that it is allowed to enter into the discharge mode, the bidirectional charger (12) generates a discharge instruction, which indicates that a discharge process is permitted, and transmits the discharge instruction to the battery management system (13).

In step S360, in response to the discharge instructions from the bidirectional charger (12), the battery management system (13) controls an electric lock of the discharge gun, which is connected to a vehicle socket of the electric vehicle, to be locked to lock the discharge gun, such that the discharge gun cannot be pulled out of the vehicle socket.

In step S370, when at least one of the following conditions occurs, the bidirectional charger (12) enters into a discharge-ending stage, generates an instruction indicating the discharge-ending stage and transmits the instruction to the battery management system 13: (1) detecting that the current output from the bidirectional charger (12) being less than a predetermined threshold (e.g. a predetermined threshold for this mode) for a predetermined time; (2) the state of charge being too low, for example, the residual power quantity of the battery being lower than a predetermined threshold of battery power quantity.

In step S380, in response to instruction indicating the discharge-ending stage, the battery management system (13) unlocks the electric lock to unlock the discharge gun such that the discharge gun can be pulled out of the vehicle socket.

In the above described mode of vehicle-to-load discharge, in the case that the discharge gun is connected to a power plug board via a cable so as to supply power to the load (see Figure 2A), the control box is configured to be in a sleep state after self-checking.

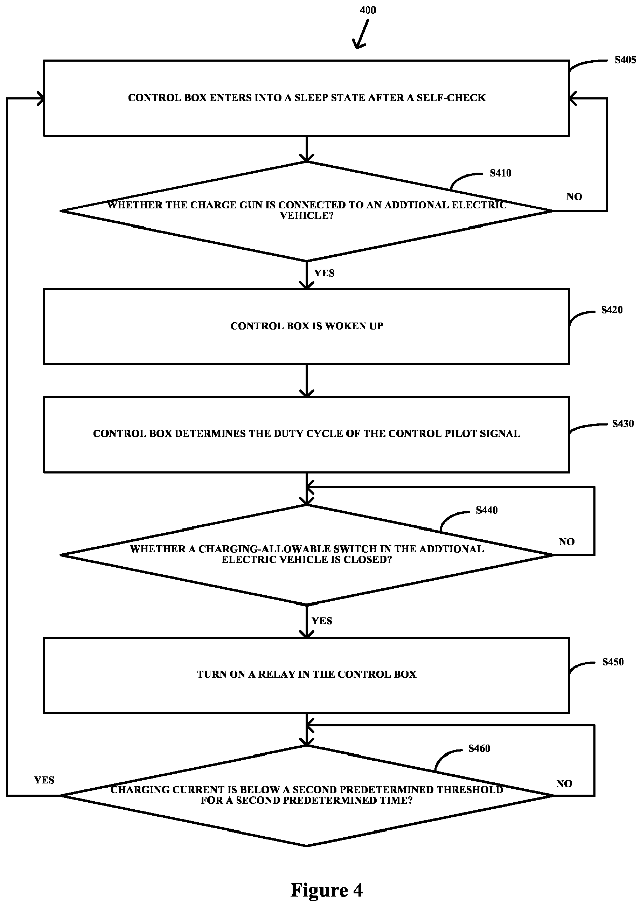

In the above described mode of vehicle-to-load discharge, a function of vehicle-to-vehicle discharge can be realized by means of a control strategy of the control box. The function of vehicle-to-vehicle discharge is realized on the basis of the structure that the vehicle-to-load discharge gun is connected to the control box via a cable and then connected to a charge gun connected to an additional electric vehicle via the control box (see Figure 2B). In the following part, referring to a method (400) shown in Fig. 4, a control process of discharging the additional electric vehicle by means of a control strategy of the control box in the mode of vehicle-to-load discharge is described. Optionally, the control method (400) is implemented using the control box. The principle of the disclosure is not limited to a control box with a specific type or a specific structure.

In step S405, the control box goes into a sleep state after self-examination.

In step S410, the control box determines whether the charge gun is connected to the additional electric vehicle. When it is determined that the charge gun is not connected to the additional electric vehicle, the method (400) returns to the step S405 and the control box is still in the sleep state.

In step S420, when the control box receives a signal indicating that the charge gun is connected to the additional electric vehicle, the control box is woken up.

In step S430, the control box determines the duty cycle of the control pilot signal based on a rating value of the cable connected with the charge gun, thereby controlling an output current output from the control box.

In step S440, the control box detects whether a charging-allowable switch in the additional electric vehicle (i.e., the electric vehicle to be charged) is closed. The charging-allowable switch is configured to be closed when the electric vehicle which is to be charged is in a rechargeable state (i.e., a charging-allowable state).

In step S450, when the control box detects that the charging-allowable switch is closed, controls a relay (for example, AC relay) in the control box to be turned on so as to output the charge current.

In step S460, the control box determines whether it is necessary to stop outputting the charge current. For example, when at least one of the following conditions occurs, the control box controls the relay to be turned off so as to stop outputting the discharge current and goes into the sleep state: (1) the control box detects that the charging-allowable switch is open; (2) the control box detects its own fault; (3) the control box detects that the charge gun is disconnected from the additional electric vehicle; and (4) the control box detects that the charge current is below a predetermined threshold (for this condition) for a predetermined time.

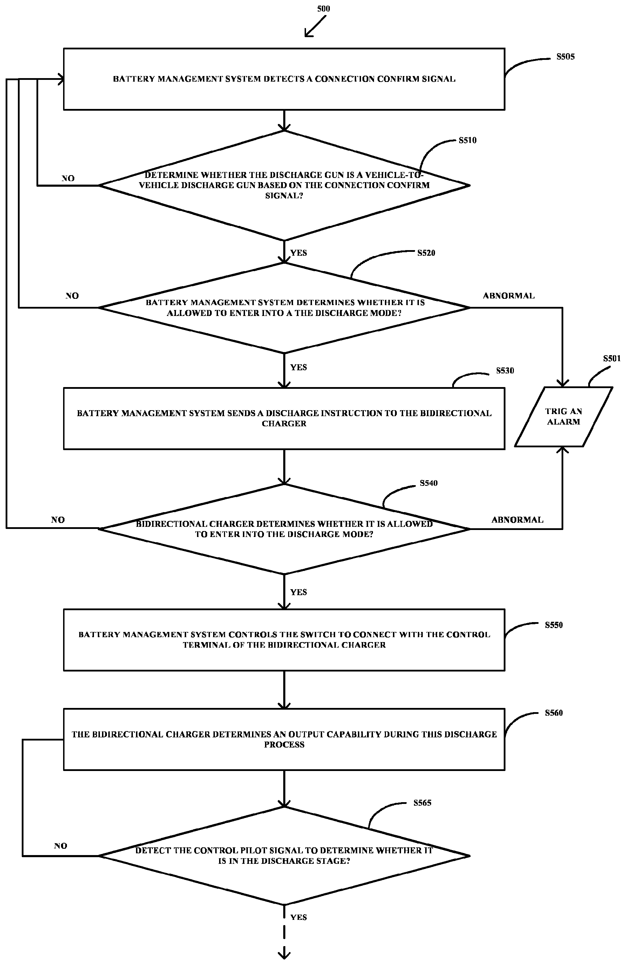

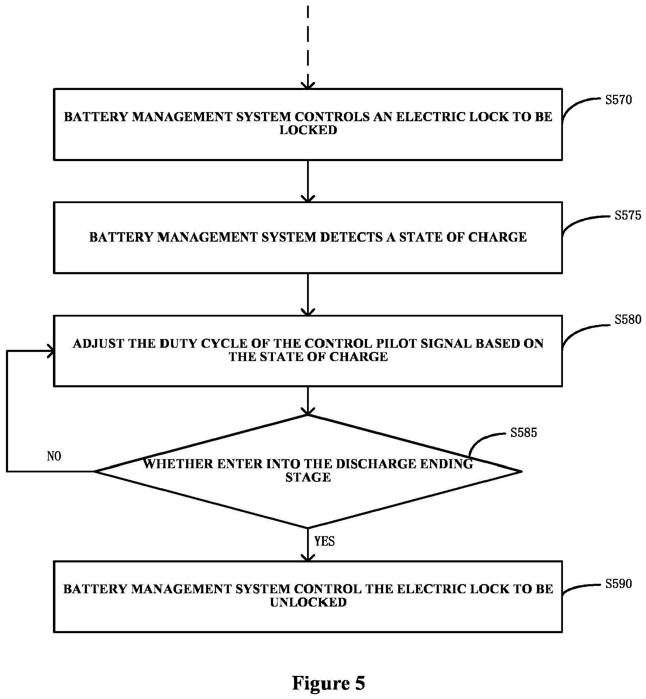

Fig. 5 shows a control method (500) in the mode of vehicle-to-vehicle discharge according to a feasible embodiment of the disclosure. Optionally, the control method (500) is implemented using the above described control device (10). The principle of the disclosure is not limited to a control device with a particular type or a particular structure.

In step S505, the battery management system (13) detects the connection confirm signal (CC: Connection Confirm) from a line connected to the vehicle socket.

In step S510, the battery management system (13) determines whether the type of gun connected to the vehicle socket is a type of vehicle-to-vehicle discharge gun based on the connection confirm signal. For example, the connection confirm signal includes a resistance information indicating a resistance value of the resistance (e.g. R1 and R2) in the head of the gun connected to the vehicle socket, and the battery management system (13) determines the type of the gun based on the resistance information.

In step S520, the battery management system (13) determines whether the it is allowed to be entered into the discharge mode. In this step, the battery management system (13) detects the discharge gun, for example, the battery management system (13) detects whether there is an abnormal leakage of the discharge gun. The battery management system (13) determines whether discharge conditions are met based on a combination of its own state and a vehicle state. For example, battery management system (13) performs a self-check, and when abnormal conditions occur, the method 500 returns to step S505 and triggers an alarm (block 501). When the step of trigging an alarm is performed, the electric vehicle can be notified by an information via a bus (for example, controller local area network), and a corresponding warning information can be provided in the vehicle by an apparatus (e.g., a dashboard) or an alarm lamp. In the case that the step of triggering an alarm is performed, information including abnormal conditions (e.g., reasons of failure, etc.) can be stored in a memory of the control system.

In step S530, when the battery management system (13) determines that it is allowed to be entered into the discharge mode, a discharge instruction is sent to the bidirectional charger (12).

In step S540, the bidirectional charger (12) determines whether it is allowed to be entered into the discharge mode. In this step, the bidirectional charger (12) conducts a self-check to determine whether it is allowed to be entered into the discharge mode. When an abnormal condition occurs, the method 500 returns to step S505 and triggers an alarm (block 501). When the step of trigging an alarm is performed, the vehicle can be notified by an information via a bus (for example, controller local area network), and a corresponding warning information can be provided in the electric vehicle by an apparatus (e.g., a dashboard) or an alarm lamp. In the case that of the step of triggering an alarm is performed, information including the abnormal condition (e.g., reasons of failure, etc.) can be stored in a memory of the control system.

In step S550, the battery management system (13) controls the switch (50) to be connected with the control terminal (123) of the bidirectional charger (12), such that the control pilot signal is transmitted to the vehicle-to-vehicle discharge gun via the control terminal (123) of the bidirectional charger (12).

In step S560, the bidirectional charger (12) determines an output capability of this discharge process as a minimum value of its own output capability, a state of charge obtained by the battery management system (13) (for example, the state of charge is obtained based on the state of the battery monitored by the battery management system (13)) and a maximum rating value of the cable connected with the discharge gun (for example, based on the cable of the discharge gun). That is to say, according to the control method (500), the discharge power is determined by means of taking into account the following three factors: an output capacity of the bidirectional charger, a state of charge and a maximum rating value of the cable connected with the discharge gun, and thus a more efficient and intelligent discharge strategy is realized. In step S565, the bidirectional charger (12) detects a state of the control pilot signal to determine whether the bidirectional charger (12) is in the discharge stage. For example, the voltage value of the control pilot signal in a discharge state will be different from that in a non-discharge state, and the bidirectional charger (12) determines whether it is in a discharge state or not based on this voltage value. In this step, in the case of determining as in the discharge state, the bidirectional charger (12) generates an instruction indicating that it is in the discharge state and transmits the instruction to the battery management system (13).

In step S570, in response to the instruction from the bidirectional charger (12), the battery management system (13) controls an electronic lock of the discharge gun connected with the vehicle socket of the electric vehicle to be locked to lock the discharge gun, so as to prevent the discharge gun from being pulled out of the vehicle socket.

In step S575, the battery management system (13) monitors an output state of the battery. In this step, the battery management system (13) detects the parameters of the battery (e.g., the battery state of charge) to obtain the output state of the battery. The battery management system (13) sends the obtained output state of the battery (e.g., battery state of charge) to the bidirectional charger (12).

In step S580, the bidirectional charger (12) adjusts the duty cycle of the control pilot signal based on the output state of the battery (e.g., the battery state of charge), so as to control the output current.

In step S585, the battery management system (13) determines whether it is necessary to enter into the discharge ending stage, for example, it is necessary to enter into the discharge ending stage when at least one of the following conditions occurs: (1) the battery management system (13) finds its own fault in a periodic self-check; (2) the battery management system (13) receives a signal indicating that the bidirectional charger (12) has failed in a periodic self-check; (3) the battery management (13) receives a signal indicating that the additional electric vehicle is fully charged; (4) the battery management system (13) receives a signal indicating that the connection confirm signal is abnormal and/or the control pilot signal is abnormal.

In step S590, the battery management system (13) controls the electric lock to be unlocked to unlock the discharge gun, such that the discharge gun can be pulled out of the vehicle socket. Then, the battery management system (13) controls the switch (50) to be connected with the control terminal (131).

From the above description, it can be seen that the technical solution of the disclosure is able to improve the compatibility and discharge efficiency, reduce the cost, and the requirements of economy and comfort of an electric vehicle are better met. Moreover, the technical solution of the disclosure is widely applicable.

In yet another aspect of the disclosure, it provides an electric vehicle, which includes the control device described above, and thus some or all of the technical features and advantages of the control device described above are also applicable here.

While certain embodiments have been described, these embodiments have been presented by way of example only, and are not intended to limit the scope of the invention. The attached claims and their equivalents are intended to cover all the modifications, substitutions and changes as would fall within the scope and spirit of the invention.

## Claims

1. A control system for discharge control of an electric vehicle comprising:
a bidirectional charger configured to be connected with a battery of the electric vehicle and to output battery power through a discharge gun; and
a battery management system connected with the bidirectional charger, the battery management system being configured to determine the type of the discharge gun based on a connection confirm signal from a circuit connected with the discharge gun, and the type of the discharge gun being a type of a vehicle-to-load discharge gun or a type of a vehicle-to-vehicle discharge gun;
wherein the bidirectional charger is configured to determine an output capacity during a discharge process as a minimum value of its own output capacity, a state of charge and a maximum rating value of a cable connected with the discharge gun.

2. The control system according to claim 1, wherein when the type of the discharge gun is determined as the type of a vehicle-to-vehicle discharge gun, the battery management system controls a switch to be connected with a control terminal of the bidirectional charger such that a control pilot signal is transmitted from the bidirectional charger to the vehicle-to-vehicle discharge gun;
the bidirectional charger adjusts a duty cycle of the control pilot signal based on the output capability so as to determine an output current; and
the bidirectional charger adjusts the duty cycle of the control pilot signal in real time based on the state of charge, which is monitored by the battery management system, so as to adjust the output current.

3. The control system according to claim 1 or 2, wherein when the type of the discharge gun is determined as the type of the vehicle-to-load discharge gun, the vehicle-to-load discharge gun is configured to couple with a load via a power outlet to supply the battery power to the load; or the control system further includes a control box connected between the vehicle-to-load discharge gun and a charge gun so as to realize a vehicle-to-vehicle discharge in a mode of vehicle-to-load discharge; and
wherein the control box is configured to be woken up from a sleep state in response to a signal indicating a connection completion between the charge gun and an additional electric vehicle, and to determine a duty cycle of the control pilot signal based on a rating value of a cable connected with the charge gun so as to determine a charge current.

4. The control system according to claim 3, wherein the control box is further configured to control a relay in the control box to turn on so as to output the charge current when the control box detects that a charging-allowable switch in the additional electric vehicle is closed.

5. The control system according to claim 3 or 4, wherein the control box is further configured to control the relay to turn off so as to stop outputting the charge current and to enter into the sleep state when at least one of the following conditions occurs:
detecting that the charge current is below a predetermined threshold for a predetermined time;
detecting that the charging-allowable switch is open;
detecting a failure of the control box; and
receiving a signal indicating that the charge gun is disconnected from the additional electric vehicle.

6. The control system according to any one of claims 1 to 5, wherein the battery management system is configured to detect the state of itself and a state of the electric vehicle after determining the type of the discharge gun, so as to determine whether the electric vehicle is allowed to enter into a discharge stage, and configured to trigger an alarm when an abnormal condition occur; and
when the battery management system determines that the electric vehicle is allowed to enter into the discharge stage, the bidirectional charger is configured to detect its own state to determine whether the electric vehicle is allowed to enter into the discharge stage, and configured to trigger an alarm when an abnormal condition occur.

7. The control system according to claim 6, wherein the control system is configured to notify the electric vehicle via a bus and provide an alarm message in the electric vehicle when the step of trigging an alarm is executed.

8. The control system according to claim 6 or 7, wherein the control system is further configured to store information including the abnormal condition in a memory of the control system when the step of trigging an alarm is executed.

9. The control system according to claims 1 to 8, wherein the bidirectional charger has a discharge stage during which the battery power is outputted through the discharge gun, and a discharge ending stage during which the output of the battery power is ending;
the battery management system is configured to lock an electronic lock for the discharge gun when the bidirectional charger is in the discharge stage, such that the discharge gun is unable to disconnect from a vehicle socket of the electric vehicle; and
the battery management system is further configured to unlock the electronic lock when the bidirectional charger is in the discharge ending stage, such that the discharge gun is able to disconnect from the vehicle socket.

10. A control method for discharge control of an electric vehicle, optionally implemented using the control system according to any one of claims 1 to 9, the control method comprising the steps of:
determining a type of a discharge gun based on a connection confirm signal from a circuit connected with the discharge gun, and the type of the discharge gun being a type of a vehicle-to-load discharge gun or a type of a vehicle-to-vehicle discharge gun;
after determining the type of the discharge gun, the battery management system detecting a state of the battery management system and a state of the electric vehicle to determine whether it is allowed to enter into a discharge stage, and triggering an alarm when an abnormal condition occurs;
in the case of the battery management system determining that it is allowed to enter into the discharge stage, the bidirectional charger detecting a state of the bidirectional charger to determine whether it is allowed to enter into the discharge stage, and triggering an alarm when an abnormal condition occurs; and
in the case of the bidirectional charger determining that it is allowed to enter into the discharge stage, the bidirectional charger determining an output capacity during a discharge process as a minimum value of its own output capacity, a state of charge and a maximum rating value of a cable connected with the discharge gun.

11. The control method according to claim 10, wherein when the type of the discharge gun is determined as the type of the vehicle-to-vehicle discharge gun, the control method comprises the steps of:
the battery management system controlling a switch to be connected with a control terminal of the bidirectional charger, such that the control pilot signal is transmitted from the bidirectional charger to the vehicle-to-vehicle discharge gun;
the bidirectional charger adjusting a duty cycle of the control pilot signal based on the determined output capability to determine an output current; and
the bidirectional charger adjusting the duty cycle of the control pilot signal in real time to adjust the output current based on the state of charge which is monitored by the battery management system.

12. The control method according to claim 10 or 11, wherein when the type of the discharge gun is determined as the type of the vehicle-to-load discharge gun, the control method comprises the steps of:
coupling the vehicle-to-load discharge gun with a load via a power outlet to supply power to the load; or coupling the vehicle-to-load discharge gun with a charge gun through a control box to charge an additional electric vehicle in the mode of vehicle-to-load discharge;
wherein the control box is configured to be woken up from a sleep state in response to a signal indicating a connection completion between the charge gun and the additional electric vehicle, and to determine a duty cycle of the control pilot signal based on a rating value of a cable connected with the charge gun to determine the charge current.

13. The control method according to claim 12, wherein the control box controls a relay in the control box to turn on so as to output the charge current when the control box detects that a charging-allowable switch in the additional electric vehicle is closed.

14. The control method according to claim 12 or 13, wherein the control box controls the relay to turn off so as to stop outputting the charge current and to enter into the sleep state in case of at least one of the following conditions occurs:
detecting that the charge current is below a predetermined threshold for a predetermined time;
detecting that the charging-allowable switch is open;
detecting a failure of the control box; and
receiving a signal indicating that the charge gun is disconnected from the additional electric vehicle.

15. The control method according to claims 10 to 14, wherein the method further comprises the steps of:
locking an electronic lock for the discharge gun such that the discharge gun is unable to disconnect from a vehicle socket of the electric vehicle; and
unlocking the electronic lock such that the discharge gun is able to disconnect from the vehicle socket.
